# FASCICULE DE BREVET EUROPEEN

(11) **EP 0 532 424 B1**
(45) Date de publication et mention de la délivrance du brevet: **31.05.1995**
(21) Numéro de dépôt: 92402491.2
(22) Date de dépôt: 11.09.1992
(51) Int. Cl.: B60T 15/04

(54) **Valve de commande de pression de fluide**
Fluiddruck-Steuerventil
Fluid pressure control valve

(30) Priorité: 13.09.1991 FR 9111339
(43) Date de publication de la demande: 17.03.1993
(73) Titulaire: WABCO WESTINGHOUSE EQUIPEMENTS AUTOMOBILES, F-77410 Claye Souilly (FR)
(72) Inventeur: Deschenes, Roger, F-93370 Montfermeil (FR); Bion, Jacques, F-93600 Aulnay sous Bois (FR)
(74) Mandataire: Hirsch, Marc-Roger

(56) Documents cités:
- EP-A- 0 203 894
- DE-A- 2 658 206
- DE-A- 3 444 639

## Description

La présente invention s'applique à une valve de commande de pression de fluide comprenant un organe détendeur apte à fournir du fluide sous une pression détendue, fonction de la position d'un organe de commande, par exemple un levier manuel, à partir d'une source de fluide sous pression reliée à l'alimentation de l'organe détendeur et qui comprend une valve de coupure interposée entre la source de fluide sous pression et l'alimentation de l'organe détendeur et qui est susceptible de relier ladite alimentation à la source de fluide sous pression, et respectivement à la décharge.

De telles valves de commande décrites par exemple dans FR-A-2384662 sont utilisées notamment pour constituer la valve de commande de freinage de secours des véhicules industriels routiers freinés à l'air comprimé. Ces valves de freinage de secours sont réalisées sous la forme d'un robinet détendeur commandé manuellement par un levier pivotant en général sur un arc de l'ordre de 90°. La plupart des freins de secours actuels pour le freinage à air comprimé des véhicules industriels comportent des cylindres de frein à ressort dont le freinage est déclenché par la mise à l'échappement progressif des chambres de pression de desserrage. Les nouvelles réglementations pour le freinage des véhicules industriels prévoient que les circuits de freinage de ces véhicules doivent être équipés de moyens ayant pour effet de rendre impossible le desserrage des freins à ressort utilisés en frein de parc et en frein de secours aussi longtemps que le frein de service du véhicule n'est pas alimenté à une pression suffisante pour assurer au freinage du véhicule la décélération correspondant au freinage de secours.

Par ailleurs, EP-A-203894 décrit un dispositif de sécurité pour des cylindres de frein pneumatiques pour véhicules ferroviaires, comprenant une section de frein de service reliée à un circuit pneumatique de frein de service et une section de frein de parc reliée à une alimentation en air comprimé et conçue pour fonctionner à la suite de l'interruption de cette liaison et de la purge de la section de frein de parc. Ce dispositif de sécurité comporte une valve d'arrêt interposée entre l'alimentation en air comprimé et la section de frein de parc du cylindre de frein et conçue pour maintenir ouverte la communication même en cas de panne ou d'interruption électrique, et pour ne permettre la coupure de cette communication, et par conséquent le fontionnement de la section de frein de parc, que dans le cas de panne ou d'interruption électrique avec actionnement simultané de la section de frein de service du cylindre.

Un tel dispositif de sécurité comporte une valve intégrée à chaque cylindre de frein pneumatique alors que la présente invention a pour but d'intégrer à la valve de frein de secours pour des freins à ressort de véhicule, des moyens permettant de rendre impossible le desserrage du frein à ressort aussi longtemps que la pression d'alimentation minimale au robinet de frein de service, assurant la décélération de secours du véhicule, n'est pas assurée.

A cet effet, selon l'invention, la valve de coupure comporte un clapet à portée annulaire, formant clapet anti-retour lorsqu'il est repoussé sur un siège par la pression de ladite source de fluide, pour isoler une chambre de communication, reliée en permanence à l'alimentation de l'organe détendeur et dans laquelle débouche un poussoir creux de mise à l'atmosphère qui est susceptible d'obturer la mise à l'atmosphère et d'ouvrir ledit clapet à portée annulaire, par appui de son extrémité creuse sur ledit clapet sous l'effet de la pression de la source de fluide ou d'une autre source de fluide agissant sur un piston solidaire dudit poussoir, à l'encontre d'au moins un ressort taré dont le tarage définit une valeur déterminée de sécurité de la pression de ladite source de fluide ou de ladite autre source de fluide, en dessous de laquelle le poussoir creux relie à la décharge ladite alimentation.

Selon un autre mode de réalisation de l'invention, le poussoir creux traverse un flasque délimitant de façon étanche, par appui frontal sous l'effort de réaction du ressort taré, sur la surface d'épaulement du fond d'un alésage, le fond de la chambre de communication du côté du piston du poussoir et ledit flasque porte un manchon de guidage et d'étanchéité, orienté du côté du piston du poussoir et entourant le poussoir creux de façon étanche, à l'aide d'au moins un joint d'étanchéité annulaire interposé entre la surface extérieure dudit poussoir et la surface intérieure dudit manchon. Le flasque délimite dans un alésage, avec le piston du poussoir et ce dernier, une chambre annulaire de mise à la décharge, dans laquelle est interposé entre le flasque et le piston ledit ressort taré constitué par un ressort hélicoïdal et la chambre annulaire est reliée à la décharge par un passage débouchant dans la paroi de l'alésage du flasque et respectivement au passage intérieur du poussoir creux.

Selon un autre mode de réalisation de la valve de coupure, le poussoir creux comporte, à proximité de son extrémité ouverte, du côté du clapet à portée annulaire, des moyens d'encliquetage, par exemple des saillies, qui traversent un alésage du flasque à la façon d'un encliquetage élastique, assurant un montage encliqueté sur le flasque du poussoir creux et du piston qui lui est solidaire, à l'encontre du ressort taré, pour former un boîtier du ressort taré monté dans un alésage de réception de la valve de coupure. Le flasque porte le siège du clapet à portée annulaire qui est repoussé sur le siège par l'extrémité d'un ressort hélicoïdal de clapet en appui à l'autre extrémité sur des griffes de retenue solidaires dudit siège de clapet et formant un boîtier de clapet. Ce boîtier de clapet est susceptible de s'engager dans un alésage de clapet au fond duquel est ménagée une liaison avec la source de fluide et le boîtier de clapet est susceptible de venir en appui de façon étanche sur le fond de l'alésage autour du débouché de l'alésage de clapet. Le fond de l'alésage de clapet comporte une surface de butée susceptible de coopérer avec ladite autre extrémité du ressort de clapet et de la désolidariser des griffes de retenue. La chambre annulaire est reliée à la décharge de l'organe détendeur, immédiatement à l'aval de cet organe détendeur, et en amont des moyens de protection de cette décharge.

Selon un autre mode de réalisation de l'invention, la valve de coupure comporte un corps monobloc avec le corps principal commun de l'organe détendeur, et ce corps principal est muni de raccords de liaison respectifs: vers la source de fluide sous pression reliée à l'organe détendeur via la valve de coupure, vers au moins un organe commandé par ladite valve, par exemple un cylindre de frein, vers ladite autre source de fluide servant de pression pilote à la valve de coupure et, le cas échéant, vers un circuit de commande annexe, par exemple une valve de commande de remorque, et/ou vers un circuit centralisé de décharge. Ces divers raccords sont, de préférence, tous disposés sur une même face du corps commun, à proximité les uns des autres pour former un bloc de raccords.

Selon encore un autre mode de réalisation de la valve de commande de pression de fluide selon l'invention, cette valve comporte un robinet de commutation apte à substituer à ladite autre source de fluide sous pression, la source de fluide sous pression d'alimentation de l'organe détendeur, de manière à permettre l'ouverture de secours de la valve de coupure en cas de défaillance de ladite autre source de fluide.

D'autres buts, avantages et caractéristiques apparaîtront à la lecture de la description de divers modes de réalisation de l'invention, faite à titre non limitatif et en regard du dessin annexé, dans lequel:
- la figure 1 représente en coupe schématique la valve de commande selon l'invention, reliée aux divers éléments du circuit de freinage d'un véhicule industriel freiné à l'air comprimé;
- la figure 2 est une vue en plan de la partie inférieure de la valve de commande de la figure 1, cette vue étant destinée à illustrer les raccords de la valve et la position de la valve de coupure;
- la figure 3 représente, en vue fragmentaire à plus grande échelle et en coupe longitudinale, un autre mode de réalisation de la valve de coupure, destinée à être intégrée à une valve de commande de pression pour constituer la valve de commande selon l'invention.

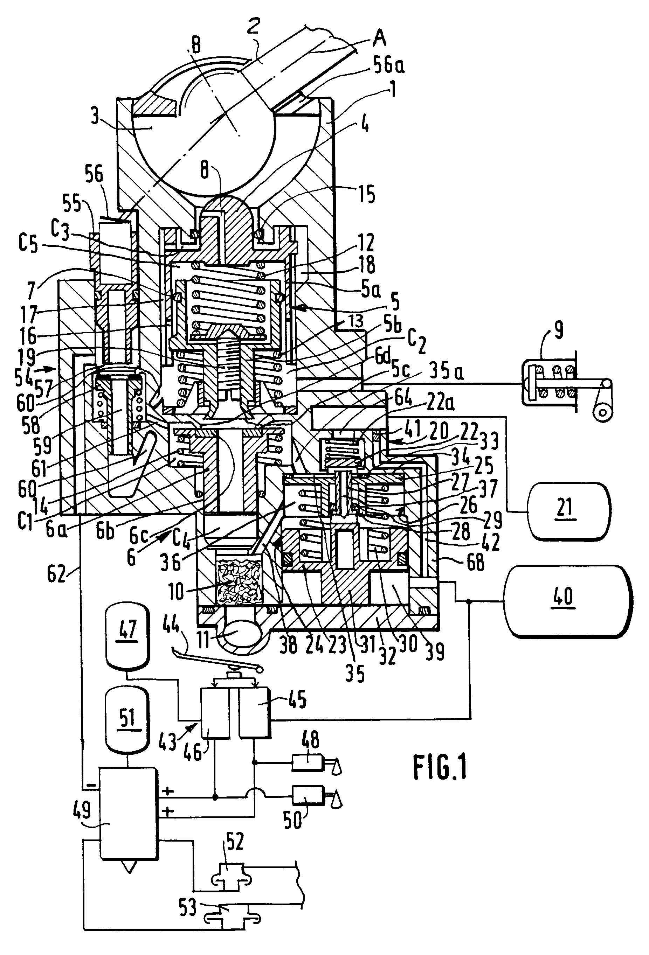

On a représenté sur la figure 1 une valve de commande de frein de parc à ressorts, constituée par un robinet de frein pneumatique manuel pour l'alimentation inversée d'un circuit de freinage à ressorts de véhicule routier lourd. Il comprend, dans un corps 1, un levier de commande 2 qui se termine par une came 3, et qui est apte à assurer un freinage de stationnement lorsque le levier 2 est placé dans la position représentée schématiquement par le trait d'axe A et un freinage de secours modérable quand le levier 2 passe de la position B ou "route, freins desserrés" vers une position quelconque intermédiaire entre A et B. Alors qu'il est rappelé vers la position B par un ressort de torsion non représenté, le levier peut néanmoins être verrouillé de façon connue en position A, freins serrés.

Le corps 1 loge et guide en outre un poussoir 4 et un double piston 5 de commande et de progressivité. Un organe détendeur 6 placé à la base du robinet comprend un double clapet 6a guidé de façon étanche dans un alésage 6b pour constituer avec le siège 5c d'un poussoir 5b une valve d'admission et une valve d'échappement. Des alésages dans le corps 1 du robinet délimitent avec le double piston 5 et le double clapet 6a: une chambre d'alimentation C1, une chambre d'utilisation C2, C3 et une chambre d'échappement C4.

Le double piston de commande 5 comprend deux éléments 5a, 5b, placés en tandem et sollicités dans une direction opposée par la pression de réaction régnant dans la chambre C2, C3. Les éléments 5a, 5b constituent ainsi un ensemble télescopique en forme de douille et coulissent l'un dans l'autre de façon étanche grâce à un joint annulaire d'étanchéité 7, en délimitant entre eux une chambre C5 de volume variable et reliée à l'atmosphère, par exemple par un canal 8 ménagé dans le fond de l'élément 5a et dans le poussoir 4.

Le détendeur 6 a pour fonction soit d'isoler la chambre d'utilisation C2, C3 (reliée à des cylindres de frein à ressort 9) par application du siège 5c du poussoir 5b sur le siège en élastomètre 6c du double clapet 6a, soit de mettre en communication cette chambre C2, C3 avec la chambre d'alimentation C1 après l'ouverture du double clapet 6a, ou bien avec l'atmosphère, comme représenté sur la figure 1 où une chambre d'échappement général C4 est reliée, via un filtre d'échappement 10, à une conduite générale d'échappement 11.

Un ressort de progressivité 12 est logé dans la chambre C5, interposé entre les deux éléments télescopiques 5a, 5b. Un ressort de rappel 13 est logé dans la chambre C2, interposé entre l'élément de poussoir 5b et le corps du robinet 1. Un ressort 14 sollicite le double clapet 6a du détendeur 6 vers ses deux sièges (6d ou 5c). Un joint torique ou à lèvre 15 est placé entre la partie formant poussoir 4 de l'élément 5a et le corps 1 du robinet.

De manière à solliciter vers le bas l'élément 5a à l'encontre de l'élément inférieur 5b, l'air comprimé délivré par le détendeur 6 dans la chambre C2 emprunte des rainures 16, le passage annulaire 17 et d'autres dégagements 18 prévus dans le corps 1 ou dans la surface extérieure de l'élément 5a, pour parvenir à la chambre supérieure C3, l'élément 5b étant immobilisé en rotation par rapport à l'élément 5a et par rapport au corps 1.

Le double piston 5 est équilibré lorsque le siège 5c du poussoir 5b est en appui sur le siège en élastomère mou 6c du double clapet 6a et il est ainsi possible d'utiliser un ressort 12, taré par une vis de réglage 19 et qui présente une force de réaction importante. L'effort nécessaire pour manoeuvrer le levier 2 est ainsi pratiquement indépendant de la pression délivrée aux cylindres de frein à ressort 9 et faiblement influencé par les efforts de friction des joints d'étanchéité.

Une valve de coupure 20 est interposée entre la chambre d'alimentation C1 du robinet de frein qui constitue un organe détendeur de pression et une source de fluide sous pression d'alimentation de la chambre C1, constituée ici par un réservoir d'air comprimé 21 alimenté de façon classique par un compresseur via des valves de distribution et de protection non représentées. Cette valve de coupure 20 est formée tout d'abord d'un clapet anti-retour 22 repoussé sur son siège par un ressort 22a et disposé de telle façon que l'écoulement de l'air comprimé du réservoir 21 vers la chambre d'alimentation C1 confirme la fermeture du clapet 22. La valve 20 comporte ensuite un boîtier à ressort formé d'un piston 23 mobile dans un alésage 24 de façon étanche grâce à l'interposition d'un joint d'étanchéité et respectivement d'un flasque 25 logé au fond d'un alésage 26 coaxial à l'alésage 24. Le piston 23 porte un poussoir 27 qui traverse le flasque 25 de façon étanche grâce à un manchon de guidage 28 et à un joint d'étanchéité 29 interposé entre le manchon et le poussoir. Le flasque 25 est susceptible, sous l'effet de l'effort de réaction d'au moins un ressort hélicoïdal taré 30, 30a interposé entre le flasque 25 et le piston 23 qui est en appui par un butée 31 sur un fond de fermeture 32 (qui porte ici la canalisation de décharge 11), de venir en appui par un joint d'étanchéité 33 sur le fond 34 de l'alésage 26. Il délimite ainsi une chambre de communication 35 reliée en permanence par un passage 35a à la chambre d'alimentation C1 du détendeur 6. L'espace intérieur 36 compris entre le piston 23, le flasque 25 et les alésages 24 et 26 communique d'une part avec le passage intérieur 37 du poussoir 27 et d'autre part, par un passage 38, avec la chambre de décharge C4.

Une chambre de piston 39 délimitée entre le fond de fermeture 32 et le piston 23 communique ici avec un réservoir d'air comprimé 40 qui sert de pression pilote à surveiller et constitue la source de pression de fluide d'alimentation d'un robinet de frein assurant le freinage (de secours) en cas de défaillance d'un autre circuit de freinage du véhicule. Sur un véhicule industriel lourd, le circuit assurant le freinage de secours en cas de défaillance d'un autre circuit est généralement constitué par le frein du ou des essieux arrière du véhicule mais des cas critiques peuvent se présenter où, notamment en cas de grandes variations de charge sur l'essieu arrière, il est nécessaire de prendre comme circuit assurant le freinage de secours le circuit avant ou bien le circuit de freinage à ressort lui-même. Dans ce dernier cas, on pourrait imaginer d'utiliser comme pression pilote sur la chambre de piston 39, la pression du réservoir 21 que l'on peut amener en ôtant le bouchon 41 prévu sur une conduite 42 de liaison entre l'amont du clapet anti-retour de coupure 22 et la chambre 39, le raccordement au réservoir 40 étant bien entendu isolé.

Sur le circuit de freinage représenté sur la figure 1, on a prévu un robinet de frein double 43 commandé au pied par une pédale 44 qui actionne simultanément deux détendeurs: un détendeur 45 alimenté par le réservoir 40 pour le circuit de freinage arrière et un détendeur 46 alimenté par un réservoir 47, pour le circuit de freinage avant. Les sorties des détendeurs 45, 46 formant valves de freinage sont reliées l'une à des cylindres de frein arrière 48 et à l'une des entrées de pilotage + d'une valve de commande de freinage de remorque 49, et respectivement, l'autre à des cylindres de frein avant 50 et à l'autre entrée de pilotage + de la valve 49. Cette valve 49 est ici alimentée en air comprimé par un réservoir 51 faisant fonction de réservoir d'alimentation de la remorque et délivre respectivement: une pression d'alimentation du réservoir de remorque à des têtes d'accouplement 52 de conduite automatique vers une remorque et une pression de freinage à des têtes d'accouplement 53 de conduite de frein de service de remorque.

De façon bien connue, le robinet de commande de frein de remorque 49 est relié par un raccord de pilotage - à la chambre C2 d'utilisation des freins à ressort. Dans le schéma le plus complexe représenté à la figure 1, la liaison avec la chambre C2 s'effectue à travers une valve de test 54 montée dans le corps 1 du robinet. La valve 54 comporte un poussoir 55 sur lequel est susceptible de venir s'appuyer un ergot 56 (représenté schématiquement ici) de la came 3 lorsque le levier de frein 2 est amené, au-delà de la position de serrage maximum du frein à ressort, dans une position de test jusqu'à une butée de levier 56a pour laquelle les cylindres de frein à ressort 9 continuent à être reliés à l'atmosphère. Le poussoir 55 vient alors en appui par son extrémité creuse 57 sur un clapet creux 58 pour obturer la liaison entre l'intérieur 59 du clapet 58 relié par un passage 60 à la chambre d'utilisation C2 et établir une communication, par un passage 61, avec la chambre d'alimentation C1 pour réalimenter en pression d'air comprimé la conduite de liaison 62 vers le raccord de pilotage - de la valve de commande de remorque 49. La valve de test 54 permet ainsi au conducteur du véhicule de placer son véhicule en situation de freinage de parc par serrage des freins à ressort en amenant le levier 2 dans la position A représentée sur la figure 1. Cette situation déclenche également la mise à l'échappement de la conduite de pilotage 62 à travers le passage 59 du clapet 58 et par voie de conséquence la commande du serrage des freins de remorque par l'intermédiaire de la valve 49 sensible à toute action des freins de service et du frein de parc. En repoussant le levier 2 sur la butée de levier 56a, la valve de test 54 provoque la réalimentation de la conduite de pilotage 62 et le desserrage subséquent des freins de la remorque alors que les freins à ressort du véhicule tracteur restent appliqués. Il est ainsi possible au conducteur de vérifier si son véhicule complet (porteur-remorqueur et remorque) est susceptible d'être retenu en sécurité par le frein de parc à ressort du seul véhicule tracteur, même en cas de desserrage intempestif du frein de remorque.

On va maintenant expliquer le fonctionnement de la valve de commande de pression de fluide selon l'invention qui est représentée à la figure 1 avec ses liaisons vers les divers circuits de freinage du véhicule qu'elle équipe. Les cylindres de frein à ressort 9 sont reliés à l'échappement et donc placés dans la position freins serrés. On suppose que les réservoirs de pressoir de fluide (ici de l'air comprimé) du vehicule ne sont pas (ou insiffisamment) réalimentés. Pour obtenir un desserrage, le conducteur déplace le levier 2 dans la direction de l'axe B, ce qui applique l'extrémité creuse 5c du poussoir 5b sur le siège en élastomère 6c du clapet 6a et relie la chambre d'alimentation C1 à la chambre d'utilisation C2. La liaison avec le réservoir de frein à ressort 21 est alors coupée par le clapet anti-retour 22 et les freins à ressort 9 ne peuvent pas être desserrés car la pression au réservoir 40 n'est pas suffisante pour assurer la décélération minimale ou efficacité minimale de secours. Dès que la pression au réservoir 40, réalimenté de façon habituelle par le compresseur du véhicule, atteint une valeur minimale déterminée par le tarage du ressort 30, le piston 23 repousse le poussoir 27 au contact du clapet plat 22, ce qui obture la mise à l'échappement de la chambre de communication 35 et la relie au réservoir 21, par soulèvement du clapet 22 à distance de son siège, à l'encontre du ressort 22a. Les cylindres de frein à ressort 9 sont dès lors alimentés en air comprimé via la chambre d'alimentation C1 et la chambre d'utilisation C2 et peuvent être desserrés. Il en est de même du frein de remorque dont les têtes d'accouplement 53 de la conduite de frein de service cessent d'être alimentées en pression de commande de freinage par la valve relais de remorque 49 à partir de la réalimentation du raccord - de cette valve 49 par la conduite de pilotage 62, via le passage 59 du clapet 58 de la valve de test 54.

En marche normale du véhicule, les freins à ressort sont complètement desserrés car le levier 2 est amené et maintenu par son ressort de rappel sur l'axe B et le siège 5c du poussoir 5b est en appui sur le siège 6c du double clapet 6a qui est lui-même en appui sur le siège 6d du corps 1, car la pression délivrée aux cylindres de frein à ressort 9 est juste suffisante pour comprimer le ressort de progressivité 12 à la valeur demandée par la came 3 qui fait saillie vers le poussoir 4. Si la pression au réservoir 40 venait à s'évanouir, par exemple par suite d'une fuite importante sur un cylindre de frein arrière 48, la valve de coupure 20 retournerait aussitôt dans la position représentée sur la figure 1 où la chambre d'alimentation C1 est mise à l'échappement par le passage intérieur 37 du poussoir creux 27. Il ne se produirait pas pour autant de déclenchement intempestif du frein à ressort car le double clapet 6a, parfaitement équilibré, resterait en appui sur ses deux sièges coopérants 5c et 6d, sous la poussée du ressort de rappel 14. Par contre, si le conducteur déclenche le frein à ressort pour suppléer à la défaillance du frein de service raccordé au réservoir 40, il ne lui est plus possible de le desserrer tant que la pression au réservoir 40 est insuffisante. Afin de permettre de desserrer les freins à ressort d'un véhicule en panne et dont le circuit de frein de service est défaillant, il est nécessaire de mettre artificiellement la chambre de piston 39 en pression, le réservoir de frein à ressort 21 étant bien entendu alimenté. Un tel dispositif de desserrage de secours peut être intégré à la valve en utilisant la pression du réservoir 21 et un robinet de commutation (non représenté) qui commute le réservoir 21 sur la conduite de secours 42 et obture l'entrée du réservoir 40.

Un autre moyen de dépannage pourrait consister à pousser mécaniquement, avec une vis par exemple, sur le piston 23 en direction du clapet 22 afin d'ouvrir ce dernier à force.

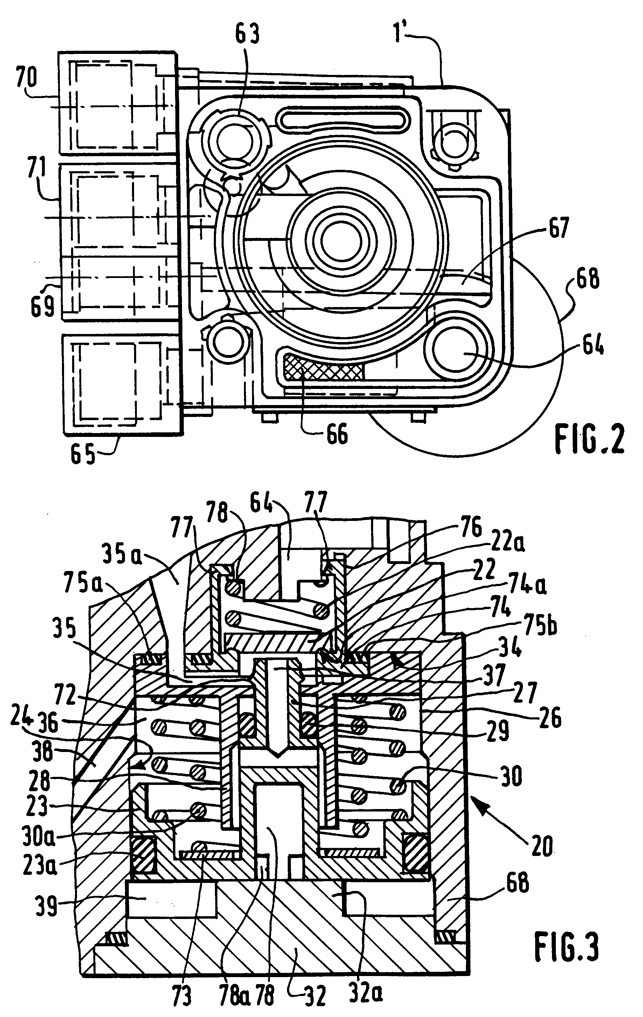

On a représenté sur la figure 2 la partie inférieure 1′ du corps 1 réalisé ici en deux pièces assemblées. On reconnaît l'alésage 63 du clapet 58 de la valve de test 54, ainsi que le passage 64 vers le clapet anti-retour 22. L'air comprimé du réservoir 21 amené au raccord 65, pénètre par le passage 64 ménagé dans un angle du corps 1, 1′ par une entrée allongée 66 du corps inférieur 1′ et ressort de la chambre de communication 35 par un passage 67 pour entrer latéralement dans la chambre d'alimentation C1. On voit sur la figure 2 que la valve de coupure 20 comporte un corps 68 partiellement en saillie sur le corps principal 1 ou 1′ et monobloc avec ce dernier. Le corps principal 1, 1′ est muni de raccords respectifs tous disposés sur une même face latérale et à proximité les uns des autres pour constituer un bloc de raccords: respectivement le raccord fileté 65 au réservoir 21, le raccord fileté 69 de pilotage vers le réservoir 40, le raccord fileté 70 vers les cylindres de frein à ressort 9, le raccord fileté 71 vers la valve de commande de remorque 49 et un raccord simple à manchon (non représenté) pour relier, le cas échéant, la conduite d'échappement 11 à un échappement général placé à distance du robinet à main qui est le plus souvent intégré au tableau de bord du véhicule.

Sur la figure 3, les éléments remplissant les mêmes fonctions que ceux représentés sur la figure 1 sont affectés des mêmes numéros de référence. Le poussoir creux 27 comporte ici, à proximité de son extrémité, des moyens d'encliquetage ou de verrouillage constitués par des saillies 72 qui présentent par exemple une inclinaison permettant une traversée aisée d'un alésage de passage ménagé dans le flasque 25 pour le poussoir creux 27 mais qui retiennent ce poussoir 27 dans l'autre sens de déplacement. Les deux ressorts hélicoïdaux tarés 30 et 30a montés dans l'espace intérieur 36 relié à l'échappement (seul le ressort intérieur 30a le plus long est taré de façon réglable par une rondelle 73 d'épaisseur variable) sont ainsi emprisonnés entre le flasque 25 et le piston 23 dans un boîtier à ressort compressible qui est repoussé par une butée 32a du couvercle 32 en direction du fond 34 de l'alésage 26. Le flasque 25 porte, monté à force dans un alésage ou soudé, un siège 74 à portée annulaire 74a pour le clapet 22. Un joint d'étanchéité double 75a, 75b est disposé sur le flasque 25 en face du fond 34 de l'alésage 26 pour étancher respectivement les débouchés sur ce fond du passage 35a vers la chambre C1 et d'un alésage de clapet 76. Dans l'alésage 76, sont engagées des griffes 77 qui retiennent le ressort 22a du clapet 22. En position d'engagement du flasque 25 sur le fond 34 de l'alésage 26, l'alésage de clapet 76 comporte une surface de butée 78 sur laquelle vient en appui une extrémité du ressort 22a qui se détache alors des griffes 77. S'il est nécessaire de retirer le boîtier à ressort formé par le piston 23 et le flasque 25 accompagné de son siège de clapet 74, on ouvre le couvercle 32, puis on tire sur le piston 23 (monté serré par son joint torique 23a dans l'alésage 24) à l'aide d'une griffe engagée dans une cavité centrale 78 du piston 23, munie de butées d'accrochage 78a. Cette traction permet de retirer le piston 23 à l'encontre de la friction de son joint 23a et les moyens de verrouillage constitués par les saillies 72 du poussoir 27 tirent le flasque 25 à l'extérieur de son alésage 26, tandis que le siège de clapet 74 entraîne les griffes 77, le ressort 22a et le clapet 22 hors de l'alésage de clapet 76.

## Revendications

1. Valve de commande de pression de fluide comprenant un organe détendeur(6) apte à fournir du fluide sous une pression détendue fonction de la position d'un organe de commande (2), à partir d'une source de fluide sous pression (21) reliée à l'alimentation(C1) de l'organe détendeur, et qui comprend une valve de coupure (20) interposée entre la source de fluide sous pression (21) et l'alimentation (C1) de l'organe détendeur (6) et qui est susceptible de relier ladite alimentation (C1) à la source de fluide sous pression (21), et respectivement à la décharge (C4), caractérisée en ce que la valve de coupure (20) comporte un clapet (22) à portée annulaire, formant clapet anti-retour lorsqu'il est repoussé sur un siège (74) par la pression de ladite source de fluide (21), pour isoler une chambre de communication (35), reliée en permanence à l'alimentation (C1) de l'organe détendeur (6) et dans laquelle débouche un poussoir creux (27) de mise à la décharge qui est susceptible d'obturer la mise à la décharge (C4) et d'ouvrir ledit clapet à portée annulaire, par appui de son extrémité creuse sur ledit clapet (22) sous l'effet de la pression de la source de fluide ou d'une autre source de fluide (40) agissant sur un piston (23) solidaire dudit poussoir (27), à l'encontre d'au moins un ressort taré (30) dont le tarage définit une valeur prédéterminée de sécurité de la pression de ladite source de fluide (21) ou de ladite autre source de fluide (40), en dessous de laquelle le poussoir creux (27) relie à la décharge (C4) ladite alimentation (C1).

2. Valve de commande selon la revendication 1, caractérisée en ce que ledit poussoir creux (27) traverse un flasque (25) délimitant de façon étanche, par appui frontal sous l'effort de réaction du ressort taré (30), sur la surface d'épaulement (34) du fond d'un alésage (26), le fond de la chambre de communication (35) du côté du piston (23) du poussoir (27) et en ce que ledit flasque (25) porte un manchon (28) de guidage et d'étanchéité, orienté du côté du piston (23) du poussoir et entourant le poussoir creux (27) de façon étanche, à l'aide d'au moins un joint d'étanchéité annulaire (29) interposé entre la surface extérieure dudit poussoir et la surface intérieure dudit manchon (28).

3. Valve de commande selon la revendication 2, caractérisée en ce que le flasque (25) délimite dans un alésage (26), avec le piston (23) du poussoir (27) et le poussoir creux (27), une chambre annulaire (36) de mise à la décharge, dans laquelle est interposé entre le flasque (25) et le piston (23) ledit ressort taré (30) constitué par un ressort hélicoïdal et en ce que la chambre annulaire (36) est reliée à la décharge par un passage (38) débouchant dans la paroi de l'alésage du flasque et respectivement au passage intérieur (37) du poussoir creux (27).

4. Valve de commande selon la revendication 3, caractérisée en ce que le poussoir creux (27) comporte, à proximité de son extrémité ouverte, du côté du clapet (22) à portée annulaire, des moyens d'encliquetage (72), par exemple des saillies, qui traversent un alésage du flasque à la façon d'un encliquetage élastique, assurant un montage encliqueté sur le flasque (25) du poussoir creux (27) et du piston (23) qui lui est solidaire, à l'encontre du ressort taré (30), pour former un boitier du ressort taré monté dans un alésage de réception (24, 26) de la valve de coupure (20).

5. Valve de commande selon la revendication 4, caractérisée en ce que le flasque (25) porte le siège (74) du clapet (22) à portée annulaire et en ce que le clapet (22) est repoussé sur le siège (74) par l'extrémité d'un ressort hélicoidal de clapet (22a) en appui à l'autre extrémité sur des griffes de retenue (77) solidaires dudit siège de clapet (74) et formant un boîtier de clapet.

6. Valve de commande selon la revendication 5, caractérisée en ce que le boîtier de clapet est susceptible de s'engager dans un alésage de clapet (76) au fond duquel est ménagée une liaison (64) avec ladite source de fluide (21) et en ce que le boîtier de clapet est susceptible de venir en appui de façon étanche (en 75b) sur le fond (34) de l'alésage (26) autour du débouché de l'alésage de clapet (76).

7. Valve de commande selon la revendication 6, caractérisé en ce que le fond de l'alésage de clapet (76) comporte une surface de butée (78) susceptible de coopérer avec ladite autre extrémité du ressort de clapet (22a) et de la désolidariser des griffes de retenue (77).

8. Valve de commande selon l'une quelconque des revendications 3 à 7, caractérisée en ce que la chambre annulaire (36) est reliée à la décharge (34) de l'organe détendeur (6), immédiatement à l'aval de cet organe détendeur et en amont des moyens de protection (10, 11) de cette décharge.

9. Valve de commande selon l'une quelconque des revendications 1 à 8, caractérisée en ce que la valve de coupure (20) comporte un corps (68) monobloc avec le corps principal commun (1, 1') de l'organe détendeur (6), et en ce que ce corps principal est muni de raccords de liaison respectifs: (65) vers la source de fluide sous pression (21) reliée à l'organe détendeur (6) via la valve de coupure (20), (70) vers au moins un organe (9) commandé par ladite valve de commande, par exemple un cylindre de frein, vers ladite autre source de fluide (40) servant de pression pilote à la valve de coupure (20) et, le cas échéant, (71) vers un circuit de commande annexe, par exemple une valve de commande de remorque, et/ou vers un circuit centralisé de décharge (11).

10. Valve de commande selon la revendication 9, caractérisée en ce que les raccords de liaison (65, 69, 70, 71) sont tous disposés sur une même face du corps commun (1, 1'), à proximité les uns des autres pour former un bloc de raccords.

11. Valve de commande selon l'une quelconque des revendications 1 à 10, caractérisée en ce qu'elle comporte un robinet de commutation apte à substituer à ladite autre source de fluide sous pression (40), la source de fluide sous pression (21) d'alimentation de l'organe détendeur (6), de manière à permettre l'ouverture de secours de la valve de coupure (20) en cas de défaillance de ladite autre source de fluide (40).

## Claims

1. Fluid pressure control valve comprising a self-lapping member (6) adapted to supply a fluid at a pressure reduced as a function of the position of a control member (2), from a source of fluid under pressure (21) connected to the supply (C1) of said self-lapping member, and which comprises a cut-off valve (20) inserted between the source of fluid under pressure (21) and the supply (C1) to said self-lapping member (6) and which is designed to link said supply (C1) respectively to said source of fluid under pressure (21) and to the discharge (C4), characterized in that said cut-off valve (20) includes a valve plate (22) with a ring seat forming a check valve when pressed against a seat (74) by the pressure of said fluid source (21) thus isolating a communication chamber (35) permanently connected to the supply (C1) of said self-lapping member (6), a hollow discharge push-rod (27) issuing into said chamber and being designed to close-off said discharge (C4) and to open said valve plate having a ring seat, as a result of the hollow end thereof bearing against said plate valve (22) under the effect of the pressure from said fluid source or another source of fluid (40) acting on a piston (23) integral with said push-rod (27), and being opposed by at least one rated spring (30), the rating of said spring defining a pre-determined safety value for the pressure of said fluid source (21) or of said other source of fluid (40), below which said hollow push-rod (27) connects said supply (C1) to the discharge (C4).

2. Control valve according to claim 1, characterized in that said hollow push-rod (27) extends through a flange (25) defining in a sealed manner, obtained by the front end thereof bearing against the surface of a shoulder (34) at the base of a passage (26) under the action of said rated spring (30), the base of said communication chamber (35) at the piston (23) end of said push-rod (27), and in that said flange (25) carries a guiding and sealing sleeve (28) directed towards the piston (23) of said push-rod and surrounding said hollow push-rod (27) in a sealed manner obtained by at least one annular sealing gasket (29) inserted between the outer surface of said push-rod and the inner surface of said sleeve (28).

3. Control valve according to claim 2, characterized in that said flange (25) defines, together with said piston (23) of the push-rod (27) and said hollow push-rod (27), an annular discharge chamber (36) within a passage (26), said rated spring (30) comprising a helical spring being fitted within said annular chamber between said flange (25) and said piston (23), and in that said annular chamber (36) is connected to the discharge by a passage (38) issuing at the wall of the flange passage and, respectively, at the inner passage (37) of said hollow push-rod (27).

4. Control valve according to claim 3, characterized in that said hollow push-rod (27) includes, in the region of its open end closest said ring-seated valve plate (22), snap-in means (72), for example projections, that pass through a passage in said flange in a yielding snap-in manner, whereby said hollow push-rod (27) and said piston (23) integral therewith are mounted in a snap-in manner on said flange (25) in opposition to said rated spring (30) thereby constituting a rated spring housing mounted in a receiving passage (24, 26) of said cut-off valve (20).

5. Control valve according to claim 4, characterized in that said flange (25) carries the seat (74) of said ring-seated valve plate (22) and in that said valve plate (22) is urged against said seat (74) by the end of a helical valve spring (22a) the other end of which bears against retaining claws (77) integral with said valve seat (74) and forming a plate valve housing.

6. Control valve according to claim 5, characterized in that said valve plate housing is designed to be engaged in a valve plate passage (76) at the base of which a connection (64) to said fluid source (21) is provided, and in that said valve plate housing is designed to bear in a sealed fashion (at 75b) against the base (34) of the passage (26) around the outlet of said valve plate passage (76).

7. Control valve according to claim 6, characterized in that the base of said plate valve passage (76) includes an abutment surface (78) designed to cooperate with said other end of said valve plate spring (22a) and to disengage it from said retaining claws (77).

8. Control valve according to any one of claims 3 to 7, characterized in that said annular chamber (36) is linked to the discharge (34) of said self-lapping member (6) immediately downstream of said self-lapping member and upstream of protection means (10, 11) for said discharge.

9. Control valve according to any one of claims 1 to 8, characterized in that said cut-off valve (20) includes a body (68) formed integrally with the main common body (1, 1') of said self-lapping member (6), and in that said main body is provided with connectors respectively leading to: (65) said source of fluid under pressure (21) linked to said self-lapping member (6) via said cut-off valve (20); (70) at least one control member (9) controlled by said control valve, for example a brake cylinder; said other source of fluid (40) providing a pilot pressure for said cut-off valve (20) and; if appropriate, (71) an auxiliary control circuit, for example a trailer control valve and/or a centralized discharge circuit (11).

10. Control valve according to claim 9, characterized in that said connectors (65, 69, 70, 71) are all arranged on a single side of said common body (1, 1') close to each other in order to constitute a connector block.

11. Control valve according to any one of claims 1 to 10, characterized in that it includes a changeover valve designed to replace said other source of fluid under pressure (40) by the source of fluid under pressure (21) supplying said self-lapping member (6) thereby allowing said cut-off valve (20) to be opened in emergency should said other source of fluid (40) fail.

## Patentansprüche

1. Fluiddruck-Steuerventil, mit einem Druckminderungselement (6), das so beschaffen ist, daß es Fluid, dessen Druck in Abhängigkeit von der Stellung eines Steuerelements (2) gemindert ist, von einer mit der Versorgungsseite (C1) des Druckminderungselements verbundenen Druckmittelquelle (21) liefern kann, und einem Absperrventil (20), das zwischen die Druckmittelquelle (21) und die Versorgungsseite (C1) des Druckminderungselements (6) eingefügt ist und so beschaffen ist, daß es die Versorgungsseite (C1) mit der Druckmittelquelle (21) oder mit dem Auslaß (C4) verbinden kann, dadurch gekennzeichnet, daß das Absperrventil (20) ein Plattenventil (22) mit ringförmiger Auflagefläche enthält, das ein Rückschlagventil bildet, wenn es durch den Druck der Fluidquelle (21) gegen einen Sitz (74) gedrückt wird, um eine Verbindungskammer (35) abzusperren, die ständig mit der Versorgungsseite (C1) des Druckminderungselements (6) verbunden ist und in die ein Auslaßkanal-Hohlstößel (27) mündet, der den Auslaßkanal (C4) verschließen kann und das Plattenventil mit ringförmiger Auflagefläche öffnen kann, indem sich sein hohles Ende unter der Wirkung des Drucks der Fluidquelle oder einer anderen Fluidquelle (40), die entgegen Wenigstens einer geeichten Feder (30) auf einen mit dem Stößel (27) verbundenen Kolben (23) wirkt, am Plattenventil (22) abstützt, wobei die Eichung der Feder (30) einen vorgegebenen Sicherheitsdruckwert der Fluidquelle (21) oder der anderen Fluidquelle (40) definiert, unterhalb dessen der Hohlstößel (27) die Versorgungsseite (C1) mit dem Auslaß (C4) verbindet.

2. Steuerventil nach Anspruch 1, dadurch gekennzeichnet, daß der Hohlstößel (27) durch einen Flansch (25) verläuft, der den Boden der Verbindungskammer (35) auf seiten des Kolbens (23) des Stößels (27) auf dichte Weise begrenzt, indem er sich stirnseitig unter der Gegenkraft der geeichten Feder (30) auf der Schulteroberfläche (34) des Bodens einer Bohrung (26) abstützt, und daß der Flansch (25) eine Führungs- und Dichtungshülse (28) trägt, die zur Seite des Kolbens (23) des Stößels gerichtet ist und den Hohlstößel (27) mit Hilfe wenigstens einer ringförmigen Dichtung (29), die zwischen die äußere Oberfläche des Stößels und die innere Oberfläche der Hülse (28) eingefügt ist, auf dichte Weise umgibt.

3. Steuerventil nach Anspruch 2, dadurch gekennzeichnet, daß der Flansch (25) in einer Bohrung (26) zusammen mit dem Kolben (23) des Stößels (27) und dem Hohlstößel (27) eine ringförmige Auslaßkanalkammer (36) begrenzt, in die zwischen dem Flansch (25) und dem Kolben (23) die von einer Schraubenfeder gebildete geeichte Feder (30) eingesetzt ist, und daß die ringförmige Kammer (36) mit dem Auslaß über einen Durchlaß (38) verbunden ist, der in die Wand der Bohrung des Flansches mündet bzw. mit dem inneren Durchlaß (37) des Hohlstößels (27) verbunden ist.

4. Steuerventil nach Anspruch 3, dadurch gekennzeichnet, daß der Hohlstößel (27) in der Nähe seines offenen Endes auf seiten der Ventilklappe (22) mit ringförmiger Auflagefläche Einrastmittel (72), beispielsweise Vorsprünge enthält, die eine Bohrung des Flansches in der Weise einer elastischen Einrastung durchqueren und eine eingerastete Anbringung des Hohlstößels (27) und des mit ihm verbundenen Kolbens (23) am Flansch (25) entgegen der geeichten Feder (30) gewährleisten, um ein Gehäuse für die in einer Aufnahmebohrung (24, 26) des Absperrventils (20) angebrachte geeichte Feder zu bilden.

5. Steuerventil nach Anspruch 4, dadurch gekennzeichnet, daß der Flansch (25) den Sitz (74) des Plattenventils (22) mit ringförmiger Auflagefläche trägt und daß das Plattenventil (22) gegen den Sitz (74) durch das Ende einer Schraubenfeder des Plattenventils (22a) gedrückt wird, die sich mit dem anderen Ende an Haltekrallen (77) abstützt, die mit dem Sitz (74) des Plattenventils verbunden und ein Plattenventilgehäuse bilden.

6. Steuerventil nach Anspruch 5, dadurch gekennzeichnet, daß das Plattenventilgehäuse mit einer Plattenventilbohrung (76) in Eingriff gelangen kann, in deren Boden eine Verbindung (64) mit der Fluidquelle (21) ausgebildet ist, und daß sich das Plattenventilgehäuse auf dichte Weise (bei 75b) am Boden (34) der Bohrung (26) um die Mündung der Plattenventilbohrung (76) abstützen kann.

7. Steuerventil nach Anspruch 6, dadurch gekennzeichnet, daß der Boden der Plattenventilbohrung (76) eine Anschlagoberfläche (78) enthält, die mit dem anderen Ende der Plattenventilfeder (22a) zusammenwirken und diese von den Haltekrallen (77) lösen kann.

8. Steuerventil nach irgendeinem der Ansprüche 3 bis 7, dadurch gekennzeichnet, daß die ringförmige Kammer (36) mit dem Auslaß (34) des Druckminderungselements (6) direkt stromabseitig von diesem Druckminderungselement und stromaufseitig von Schutzmitteln (10, 11) dieses Auslasses verbunden ist.

9. Steuerventil nach irgendeinem der Ansprüche 1 bis 8, dadurch gekennzeichnet, daß das Ansperrventil (20) einen Körper (68) enthält, der mit dem gemeinsamen Hauptkörper (1, 1') des Druckminderungselements (6) einen einzigen Block bildet, und daß der Hauptkörper mit jeweiligen Verbindungsstutzen versehen ist: (65) zur Druckmittelquelle (21), die mit dem Druckminderungselement (6) über das Absperrventil (20) verbunden ist, (70) zu wenigstens einem Element (9), das durch das Steuerventil gesteuert wird, beispielsweise einem Bremszylinder, zur anderen Fluidquelle (40), die als Vorsteuerdruck für das Absperrventil (20) dient, und gegebenenfalls (71) zu einem hinzugefügten Steuerkreis, beispielsweise einem Anhänger-Steuerventil, und/oder zu einem zentralen Entlastungskreis (11).

10. Steuerventil nach Anspruch 9, dadurch gekennzeichnet, daß die Verbindungsstutzen (65, 69, 70, 71) sämtlich auf derselben Fläche des gemeinsamen Körpers (1, 1') nebeneinander angeordnet sind und einen Stutzenblock bilden.

11. Steuerventil nach irgendeinem der Ansprüche 1 bis 10, dadurch gekennzeichnet, daß es ein Umschaltventil enthält, das so beschaffen ist, daß es die andere Druckmittelquelle (40) durch die Druckmittelquelle (21) zur Versorgung des Druckminderungselements (6) ersetzen kann, um die Sicherheitsöffnung des Absperrventils (20) bei Ausfall der anderen Fluidquelle (40) zu ermöglichen.
